# EUROPÄISCHE PATENTSCHRIFT

(11) **EP 1 257 734 B1**
(45) Veröffentlichungstag und Bekanntmachung des Hinweises auf die Patenterteilung: **08.03.2006**
(21) Anmeldenummer: 00993841.6
(22) Anmeldetag: 06.12.2000
(51) Int. Cl.: F01M 11/00, F16H 57/04

(54) **ÖLWANNE FÜR MOTOREN ODER GETRIEBE**
OIL SUMP FOR ENGINES OR GEARBOXES
CARTER D'HUILE POUR MOTEURS ET BOITES DE VITESSES

(30) Priorität: 24.02.2000 DE 10008692
(43) Veröffentlichungstag der Anmeldung: 20.11.2002
(73) Patentinhaber: IBS Filtran Kunststoff-/Metallerzeugnisse GmbH, 51597 Morsbach (DE)
(72) Erfinder: BEER, Markus, 51597 Morsbach (DE)
(74) Vertreter: Lang, Friedrich
(86) Internationale Anmeldenummer: PCT/EP2000/012250
(87) Internationale Veröffentlichungsnummer: WO 2001/063100

(56) Entgegenhaltungen:
- DE-A- 19 735 444
- DE-A- 19 735 445
- US-A- 5 494 575

## Beschreibung

Gegenstand der Erfindung ist eine Ölwanne aus Kunststoff für Motoren oder Getriebe mit integriertem Saugölfilter und mit integriertem Druckölfilter.

Aus dem Stand der Technik sind bereits verschiedene Arten von Ölfiltern für Motoren oder Getriebe bekannt. Die bekannten Filter bestehen im allgemeinen aus einem flachen Filtergehäuse aus zwei Halbschalen. Zwischen diesen beiden Halbschalen ist ein scheibenförmiges oder als Tasche geformtes oder ein faltenförmiges Filtermedium beispielsweise ein Metallsieb, ein Papierfilter oder ein Polyesterfilterfilz befestigt. Die luftdicht miteinander verbundenen Filterhalbschalen können weiter aus Metall oder Kunststoff oder einer Kombination aus Kunststoffschale oder Metallschale sein.

Nach dem Stand der Technik erfolgt die Ölfiltrierung bei einem Motor oder Automatikgetriebe durch separat außerhalb der Ölwanne angeordnete Filter. Hierbei werden Filter, Ölwannendichtung und die Ölwanne als Einzelkomponenten verwendet. Die Ölwanne besteht dabei entweder aus tiefgezogenem Stahl oder aus Aluminium-/Magnesiumguß.

Im Stand der Technik erfolgt die Anordnung der Ölfilter im allgemeinen so, daß sie bei Wartungsarbeiten leicht zugänglich sind und auf einfache Weise ausgetauscht bzw. entfernt werden können. Dies wird meist dadurch erzielt, daß die Ölfilter aus der Ebene des Motors herausragend angeordnet werden. Damit der Platzbedarf für den Ölfilter nicht zu groß wird, ist die Größe der Ölfilter bei Motorölfiltern sehr begrenzt, so daß sie eine geringe Filteroberfläche ausweisen und relativ häufig ausgewechselt werden müssen. Bei Automatikgetrieben gibt es hingegen schon Filtersysteme, die als Lebensdauerfilter angelegt sind.

Ein weiterer Nachteil ist, daß bei der Neukonstruktion von Motoren der Raum innerhalb des Motorraums im allgemeinen sehr knapp bemessen ist und daher derartige raumeinnehmende Konstruktionen an sich unerwünscht und nachteilig sind.

Die deutschen Patente 197 35 4.44.0 und 197 35 445.9 des Anmelders betreffen Weiterentwicklungen bezüglich Ölwanne und Ölfilter für Motoren und Getriebe, wobei der Ölfilter innerhalb der Ölwanne angeordnet ist. Dabei beschreibt das Patent 197 35 445.9 des Anmelders die Integration eines Saugölfliters in eine Ölwanne aus Kunststoff. Dabei kann auf herkömmliche Art und Weise ein zusätzlicher Druckölfilter mit einem plissierten stemförmigen Druckfiltermedium außerhalb der Ölwanne im Motorraum angebracht werden.

Dies hat den Nachteil, daß das durch den Druckölfilter gereinigte Öl sich in der Ölwanne wieder mit verschmutztem Öl aus dem Ölsumpf vermischt, bevor das Öl zur Reinigung in den in der Ölwanne angeordneten Saugölfilter gelangt. Weiterhin ist nachteilig, daß durch die ungezielte Führung des Öles ein Verschäumen des Öles im Druckölfilter erfolgt.

Die technische Aufgabe der Erfindung war es daher, eine Ölwanne für Motoren oder Getriebe zur Verfügung zu stellen, die die obenstehenden Nachteile vermeidet und platzsparend im Bauraum im Motor oder im Getriebe untergebracht werden kann. Weiterhin soll eine größere Filteroberfläche der Ölfilter bereitgestellt werden, so daß ein häufiger Austausch entfällt. Zudem soll vermieden werden, daß sich durch den Druckölfilter gereinigtes Öl mit verschmutztem Öl vermischt. Ebenso soll eine Verschäumung des Öls aufgrund der Filtration minimiert werden.

Diese technische Aufgabe wird gelöst durch eine Ölwanne 1 aus Kunststoff für Motoren oder Getriebe mit integriertem Saugölfilter und integriertem Druckölfilter, wobei Teile der Ölwanne 1 den Boden für Saugölfiltergehäuse 2 und Druckölfiltergehäuse 7 bilden, wobei eine ein- oder mehrteilige Abdeckung 3, 8 als Ölfilteroberschale 3, 8 für das Saugölfiltergehäuse 2 und das Druckölfiltergehäuse 7 angeordnet ist und wobei druckölfilterseitig mindestens ein Druckölfiltereinlaß 10 und saugölfilterseitig mindestens ein Saugölfilterauslaß 5 in der Ölfilteroberschale angeordnet ist, wobei ein ein- oder mehrteiliges Ölfiltermedium 4, 9 zwischen Ölwanne 1 und Ölfilteroberschale 3, 8 angeordnet ist, wobei unterhalb des Saugölfiltermediums 4 ein Saugölfiltereinlaß 6 und unterhalb des Druckölfiltermediums 9 ein Druckölfilterauslaß 11 angeordnet ist und wobei der Druckölfilterauslaß 11 und der Saugölfiltereinlaß 6 eine funktionelle Einheit bilden. Diese funktionelle Einheit des Druckölfilterauslasses 11 und des Saugölfiltereinlasses 6 stellt sich insbesondere strömungstechnisch dar.

Der Vorteil dieser Erfindung besteht in der Integration einer kombinierten Saug- und Druckölfiltration in eine Ölwanne aus Kunststoff, wobei der Ölfluß durch die optimale Anordnung beider Filter in der Ölwanne auf kürzestem Wege zueinander optimal ausgelegt wird. Dies hat den Vorteil, daß ein Vermischen des vom Druckölfilter gereinigten Öles mit verschmutztem Öl aus dem Ölsumpf verhindert wird, indem das gereinigte Öl auf kürzestem Wege in den Saugölfilter geführt wird. Desweiteren wird durch die gezielte Führung des Öles auf der Druckseite von der Pumpe in den Druckfilter das Verschäumen des Öles minimiert. Zudem wird eine größere Filteroberfläche bereitgestellt, so daß ein häufiger Austausch entfällt.

In einer weiteren Ausführungsform stellen der Druckölfilterauslaß 11 und der Saugölfiltereinlaß 6 Öffnungen einer Kammer 13 dar. Bevorzugt ist an der Kammer 13 ein weiterer Öleinlaß 14 angeordnet. Dadurch besteht die Möglichkeit unter Betriebsbedingungen, bei denen nicht 100 % des Volumenstroms an Öl durch den Druckfilter geleitet werden können, beispielsweise beim Kaltstart, einen Ölvolumenausgleich aus dem Ölwannensumpf durch diesen zusätzlichen Öleinlaß 14 durchzuführen. Damit wird ein einwandfreies Funktionieren der Ölzirkulation zur Pumpe gewährleistet.

In einer besonders bevorzugten Ausführungsform sind mindestens ein Bypassventil 12 an der Druckölfilteroberschale 8 und/oder an der Saugölfilteroberschale 3 und/oder am oder im Ölfiltermedium angeordnet. Dies ist insbesondere vorteilhaft um die Kaltfließeigenschaft des Systems zu garantieren, da insbesondere im Druckölfilter aufgrund des wesentlich feiner filtrierenden Druckölfiltermediums eine höhere Druckdifferenz herrscht. Diese Bypassventile können saug- und auch druckölfilterseitig auf herkömmliche Weise mit einer Metallspiralfeder oder mit einer temperaturabhängigen Bypassauslegung optimal ausgelegt werden.

In einer besonders bevorzugten Ausführungsform sind in der Ölwanne 1 Fließrippen angeordnet, die der Unterstützung eines gerichteten Ölflusses dienen.

In einer weiteren besonders bevorzugten Ausführungsform sind an der Außenseite der Ölwanne 1 Abstützrippen angeordnet. Diese haben den Vorteil, daß die Ölwanne auf den Boden abgestellt werden kann, ohne der Gefahr von Beschädigungen ausgesetzt zu sein. Vorzugsweise sind zusätzlich Steinschlagrippen angeordnet, um Beschädigungen der Ölwanne von außen durch Steinschlag zu verhindern.

Vorzugsweise ist in der Ölwanne 1 mindestens eine Ölablaßschraube angeordnet, um die Möglichkeit zu bieten, das Öl aus der Ölwanne abzulassen.

Weiterhin sind in einer bevorzugten Ausführungsform innerhalb der Ölwanne 1 und/oder des Saugölfiltergehäuses 2 und/oder des Druckölfiltergehäuses 7 Magnete angeordnet. Auf diese Weise wird metallischer Abrieb abgefangen, was die Funktion der Ölfiltermedien verlängert und den Verschleiß der sich bewegenden Teile des Motors oder des Getriebes verringert.

In einer besonders bevorzugten Ausführungsform ist die Ölwanne 1 auf Block zum Getriebe oder zum Motor befestigt. Vorzugsweise ist zwischen der Ölwanne 1 und dem Motor oder dem Getriebe eine T-förmige Dichtung oder eine Stegdichtung angeordnet. Bevorzugt werden weitere Sensoren in der Ölwanne integriert.

In einer besonders bevorzugten Ausführungsform sind die Ölfiltermedien flache, gefaltete oder plissierte Ölfiltermedien.

In einer weiteren besonders bevorzugten Ausführungsform wird die Abdeckung der Ölfiltergehäuse 2, 7 des Saugölfilters und des Druckölfilters von einer einteiligen gemeinsamen Ölfilteroberschale 3, 8 gebildet. Vorteilhaft ist dabei insbesondere, daß die Zahl der Einzelteile weiter reduziert wird, wobei das Gesamtgewicht und auch die Montagekosten weiter verringert werden können.

Mit der erfindungsgemäßen Ölwanne wird eine platzsparende Alternative zu herkömmlichen Anordnungen des Ölfilters im Bauraum, d.h. im Motor oder im Getriebe, zur Verfügung gestellt. Durch die Integration der oben beschriebenen Elemente in die Ölwanne entsteht eine kompakte Baugruppe und ermöglicht ein für die gesamte Lebensdauer des Fahrzeuges funktionierendes und beständiges Filtrationssystem, so daß ein häufiger Wechsel des Ölfilters entfällt. Die erfindungsgemäße Ölwanne kann von ihrer Filteroberfläche her sogar so ausgelegt werden, daß ein Wechsel des Filters während der durchschnittlichen Lebensdauer des entsprechenden Fahrzeuges nicht mehr notwendig ist. Ein weiterer Vorteil ist es, daß der ohnehin nicht genutzte Raum innerhalb der Ölwanne einer sinnvollen Verwendung zugeführt wird und durch die Verlagerung des Ölfilters aus dem Motorraum Platz gewonnen wird.

Weiterhin wird die Anzahl der benötigten Einzelteilkomponenten minimiert, wobei das gesamte Fahrzeuggewicht reduziert wird.

In den folgenden Figuren soll der Gegenstand der Erfindung näher erläutert werden.
- Figur 1: zeigt eine Ansicht der erfindungsgemäßen Ölwanne im Querschnitt
- Figur 2: zeigt eine Ansicht einer weiteren Ausführungsform der erfindungsgemäßen Ölwanne im Querschnitt

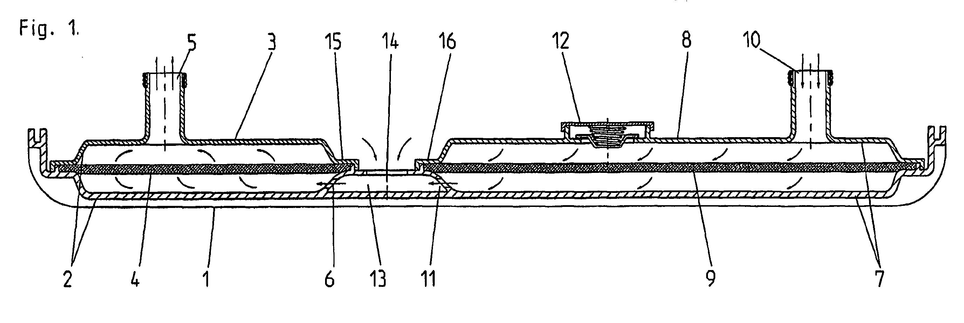

Figur 1 zeigt eine Ansicht der erfindungsgemäßen Ölwanne im Querschnitt. Die Ölwanne 1 enthält einen integrierten Saugölfilter und einen integrierten Druckölfilter, wobei Teile der Ölwanne 1 den Boden für die Gehäuse des Saugölfilters 2 und des Druckölfilters 7 bilden. Die Abdeckung dieser Gehäuse wird von der Saugölfilteroberschale 3 bzw. der Druckölfilteroberschale 8 dargestellt. Druckölfilterseitig ist ein Druckölfiltereinlaß 10 und saugölfilterseitig ein Saugölfilterauslaß 5 in der betreffenden Ölfilteroberschale angeordnet. Zwischen der Ölwanne 1 und der jeweiligen Ölfilteroberschale 3, 8 sind Ölfiltermedien 4, 9 angebracht. Dabei ist unterhalb des Saugölfiltermediums 4 ein Saugölfiltereinlaß 6 und unterhalb des Druckölfiltermediums 9 ein Druckölfilterauslaß 11 vorgesehen. Der Druckölfilterauslaß 11 und der Saugölfiltereinlaß 6 stellen Öffnungen einer Kammer 13 dar. In der gezeigten Ausführungsform besitzt die Kammer 13 einen weiteren Öleinlaß 14. In diesem Beispiel ist weiterhin ein Bypassventil 12 an der Druckölfilteroberschale 8 angebracht.

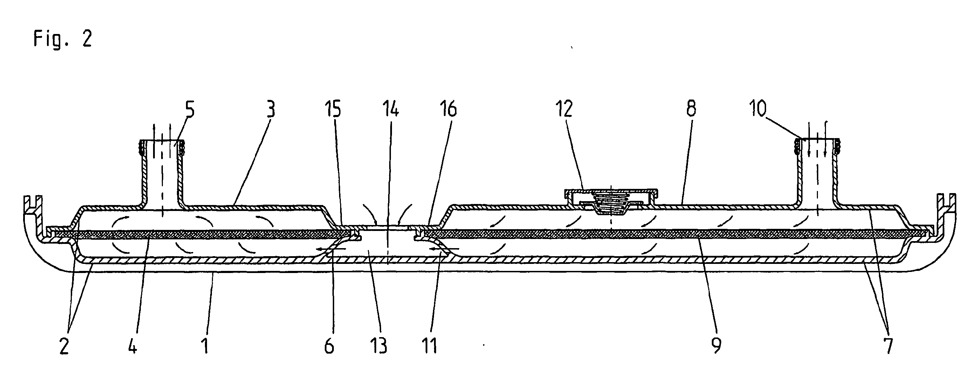

Figur 2 zeigt eine Ansicht einer weiteren Ausführungsform der erfindungsgemäßen Ölwanne im Querschnitt. Im Unterschied zu der in Figur 1 gezeigten Ölwanne wird die Abdeckung der jeweiligen Ölfiltergehäuse 2 und 7 des Saugölfilters und des Druckölfilters als eine einteilige gemeinsame Ölfilteroberschale 3, 8 ausgeführt. Dies ist in der Figur 2 im Bereich des Öleinlasses 14 der Kammer 13 zu ersehen.

### Bezugszeichenliste

- 1: Ölwanne
- 2: Saugölfiltergehäuse
- 3: Saugölfilteroberschale
- 4: Saugölfiltermedium
- 5: Saugölfilterauslaß
- 6: Saugölfiltereinlaß
- 7: Druckölfiltergehäuse
- 8: Druckölfilteroberschale
- 9: Druckölfiltermedium
- 10: Druckölfiltereinlaß
- 11: Druckölfilterauslaß
- 12: Bypassventil
- 13: Kammer
- 14: Öleinlaß
- 15: Verbindung Saugölfilter mit Ölwanne
- 16: Verbindung Druckölfilter mit Ölwanne

## Patentansprüche

1. Ölwanne (1) aus Kunststoff für Motoren oder Getriebe mit integriertem Saugölfilter und mit integriertem Druckölfilter, wobei Teile der Ölwanne (1) den Boden für Saugölfiltergehäuse (2) und Druckölfiltergehäuse (7) bilden, wobei eine ein- oder mehrteilige Abdeckung (3, 8) als Ölfilteroberschale (3, 8) für das Saugölfiltergehäuse (2) und das Druckölfiltergehäuse (7) angeordnet ist, und wobei druckölfilterseitig mindestens ein Druckölfiltereinlaß (10) und saugölfilterseitig mindestens ein Saugölfilterauslaß (5) in der Ölfilteroberschale angeordnet ist, wobei ein ein- oder mehrteiliges Ölfiltermedium (4, 9) zwischen Ölwanne (1) und Ölfilteroberschale (3, 8) angeordnet ist, wobei unterhalb des Saugölfiltermediums (4) ein Saugölfiltereinlaß (6) und unterhalb des Druckölfiltermediums (9) ein Druckölfilterauslaß (11) angeordnet ist und wobei der Druckölfilterauslaß (11) und der Saugölfiltereinlaß (6) eine funktionelle Einheit bilden.

2. Ölwanne nach Anspruch 1, **dadurch gekennzeichnet, daß** der Druckölfilterauslaß (11) und der Saugölfittereinlaß (6) Öffnungen einer Kammer (13) sind.

3. Ölwanne nach Anspruch 1 oder 2, **dadurch gekennzeichnet, daß** an der Kammer (13) ein weiterer Öleinlaß (14) angeordnet ist.

4. Ölwanne nach den Ansprüchen 1 bis 3, **dadurch gekennzeichnet, daß** mindestens ein Bypassventil (12) angeordnet ist an der Druckölfilteroberschale (8) und/oder an der Saugölfilteroberschale (3) und/oder am Ölfiltermedium und/oder im Ölfrltermedium.

5. Ölwanne nach den Ansprüchen 1 bis 4, **dadurch gekennzeichnet, daß** an der Ölwanne (1) Fließrippen angeordnet sind.

6. Ölwanne nach den Ansprüchen 1 bis 5, **dadurch gekennzeichnet, daß** an der Außenseite der Ölwanne (1) Abstützrippen angeordnet sind.

7. Ölwanne nach den Ansprüchen 1 bis 6, **dadurch gekennzeichnet, daß** an der Außenseite der Ölwanne (1) Steinschlagrippen angeordnet sind.

8. Ölwanne nach den Ansprüchen 1 bis 7, **dadurch gekennzeichnet, daß** in der Ölwanne (1) mindestens eine Ölablaßschraube angeordnet ist.

9. Ölwanne nach den Ansprüchen 1 bis 8, **dadurch gekennzeichnet, daß** innerhalb der Ölwanne (1) und/oder des Saugölfiltergehäuses (2) und/oder des Druckölfiltergehäuses (7) Magnete angeordnet sind.

10. Ölwanne nach den Ansprüchen 1 bis 9, **dadurch gekennzeichnet, daß** an zusätzlich Sensoren angeordnet sind.

11. Ölwanne nach den Ansprüchen 1 bis 10, **dadurch gekennzeichnet, daß** die Ölwanne (1) auf Block zum Getriebe oder zum Motor befestigt ist.

12. Ölwanne nach den Ansprüchen 1 bis 11, **dadurch gekennzeichnet, daß** zwischen der Ölwanne (1) und dem Motor oder dem Getriebe eine T-förmige Dichtung oder eine Stegdichtung angeordnet ist.

13. Ölwanne nach den Ansprüchen 1 bis 12, **dadurch gekennzeichnet, daß** die Ölfiltermedien flach, gefaltet oder plissiert ausgestaltet sind.

14. Ölwanne nach den Ansprüchen 1 bis 13, **dadurch gekennzeichnet, daß** die Abdeckung der Ölfiltergehäuse (2, 7) des Saugölfilters und des Druckölfilters von einer einteiligen gemeinsamen Ölfilteroberschale (3, 8) gebildet wird.

## Claims

1. A plastic oil pan (1) for engines or transmissions with integrated suction oil filter and integrated pressure oil filter, with parts of the oil pan (1) forming the base for suction oil filter housing (2) and pressure oil filter housing (7), a one-component or multi-component cover (3, 8) being arranged as oil filter upper tray (3, 8) for the suction oil filter housing (2) and the pressure oil filter housing (7), and at least one pressure oil filter inlet (10) being arranged at the pressure oil filter side and at least one suction oil filter outlet (5) at the suction oil filter side in the oil filter upper tray, with a one-component or multi-component oil filter medium (4, 9) being arranged between oil pan (1) and oil filter upper tray (3, 8), with a suction oil filter inlet (6) being arranged beneath the suction oil filter medium (4) and a pressure oil filter outlet (11) being arranged beneath the pressure oil filter medium (9), and with the pressure oil filter outlet (11) and the suction oil filter inlet (6) forming a functional unit.

2. The oil pan according to claim 1, **characterized in that** the pressure oil filter outlet (11) and the suction oil filter inlet (6) are openings of a chamber (13).

3. The oil pan according to claim 1 or 2, **characterized in that** an additional oil inlet (14) is arranged on the chamber (13).

4. The oil pan according to any one of claims 1 to 3, **characterized in that** at least one bypass valve (12) is arranged on the pressure oil filter upper tray (8) and/or on the suction oil filter upper tray (3) and/or on the oil filter medium and/or in the oil filter medium.

5. The oil pan according to any one of claims 1 to 4, **characterized in that** flow ribs are arranged on the oil pan (1).

6. The oil pan according to any one of claims 1 to 5, **characterized in that** support ribs are arranged on the outside of oil pan (1).

7. The oil pan according to any one of claims 1 to 6, **characterized in that** stone guard ribs are arranged on the outside of oil pan (1).

8. The oil pan according to any one of claims 1 to 7, **characterized in that** at least one oil drain screw is arranged in oil pan (1).

9. The oil pan according to any one of claims 1 to 8, **characterized in that** magnets are arranged in oil pan (1) and/or suction oil filter housing (2) and/or pressure oil filter housing (7).

10. The oil pan according to any one of claims 1 to 9, **characterized in that** sensors are arranged in addition.

11. The oil pan according to any one of claims 1 to 10, **characterized in that** the oil pan (1) is secured on block to the transmission or to the engine.

12. The oil pan according to any one of claims 1 to 11, **characterized in that** a T-shaped seal or a segment seal is arranged between the oil pan (1) and the engine or the transmission.

13. The oil pan according to any one of claims 1 to 12, **characterized in that** the oil filter media are of a flat, folded or pleated design.

14. The oil pan according to any one of claims 1 to 13, **characterized in that** the cover of the oil filter housing (2, 7) of the suction oil filter and pressure oil filter is formed by a common, one-piece oil filter upper tray (3, 8).

## Revendications

1. Carter d'huile (1) en matière plastique pour des moteurs ou des boîtes de vitesses à filtre à huile à aspiration intégré et à filtre à huile à pression intégré, dans lequel des parties du filtre à huile (1) forment le fond du boîtier (2) de filtre à huile à aspiration et du boîtier (7) de filtre à huile à pression, dans lequel une fermeture (3; 8) en une ou plusieurs parties est prévue pour servir de coque supérieure (3, 8) de filtre à huile pour le boîtier (2) de filtre à huile à aspiration et le boîtier (7) de filtre à huile à pression, et au moins une entrée (10) de filtre à huile à pression côté filtre à huile à pression et au moins une sortie (5) de filtre à huile à aspiration côté filtre à huile à aspiration sont placées dans la coque supérieure de filtre à huile, dans lequel un milieu filtrant (4, 9) l'huile en une ou plusieurs parties est placé entre le carter d'huile (1) et la coque supérieure (3, 8) du filtre à huile, une entrée (6) de filtre à huile à aspiration étant placée au-dessous du milieu filtrant à aspiration (4) et une sortie (11) de filtre à huile à pression étant placée au-dessous du milieu filtrant (9) l'huile à pression, et la sortie (11) de filtre à huile à pression et l'entrée (6) de filtre à huile à aspiration formant une unité fonctionnelle.

2. Carter d'huile selon la revendication 1, ***caractérisé en ce que*** la sortie (11) de filtre à huile à pression et l'entrée (6) de filtre à huile à aspiration sont des ouvertures d'une chambre (13).

3. Carter d'huile selon la revendication 1 ou 2, ***caractérisé en ce qu*'une** autre entrée (14) d'huile est placée sur la chambre (13).

4. Carter d'huile selon les revendications 1 à 3, ***caractérisé en ce qu*'au** moins une vanne de dérivation (12) est placée sur la coque supérieure (8) de filtre à huile à pression et/ou sur la coque (3) supérieure de filtre à huile à aspiration et/ou sur le milieu filtrant et/ou dans le milieu filtrant.

5. Carter d'huile selon les revendications 1 à 4, ***caractérisé en ce que*** des membrures d'écoulement sont placées sur le carter d'huile (1).

6. Carter d'huile selon les revendications 1 à 5, ***caractérisé en ce que*** des membrures de soutien sont placées sur la face extérieure du carter d'huile (1).

7. Carter d'huile selon les revendications 1 à 6, ***caractérisé en ce que*** des membrures anti-gravillons sont placées sur la face extérieure du carter d'huile (1).

8. Carter d'huile selon les revendications 1 à 7, ***caractérisé en ce qu'**au* moins une vis de vidange d'huile est placée dans le carter d'huile (1).

9. Carter d'huile selon les revendications 1 à 8, ***caractérisé en ce que*** des aimants sont placés à l'intérieur du carter d'huile (1) et/ou du boîtier (2) de filtre à huile à aspiration et/ou du boîtier (7) de filtre à huile à pression.

10. Carter d'huile selon les revendications 1 à 9, ***caractérisé en ce que*** des capteurs sont prévus en plus.

11. Carter d'huile selon les revendications 1 à 10, ***caractérisé en ce que*** le carter d'huile (1) est fixé en bloc sur la boîte de vitesse ou le moteur.

12. Carter d'huile selon les revendications 1 à 11, ***caractérisé en ce qu'**un* joint en T ou un joint à barre est placé entre le carter d'huile (1) et le moteur ou la boîte de vitesses.

13. Carter d'huile selon les revendications 1 à 12, ***caractérisé en ce que*** les milieux filtrants sont plats, pliés ou plissés.

14. Carter d'huile selon les revendications 1 à 13, ***caractérisé en ce que*** la couverture du boîtier (2, 7) de filtre à huile (1) du filtre à huile à aspiration et du filtre à huile à pression est formée par une coque supérieure de filtre à huile commune (3, 8) d'un seul tenant.
